# EUROPEAN PATENT APPLICATION

(11) **EP 1 883 171 A2**
(43) Date of publication of application: **30.01.2008**
(21) Application number: 07290897.3
(22) Date of filing: 18.07.2007
(51) Int. Cl.: H04B 7/26

(54) **Point-to-point link using partial transmit time periods on seperate transmit and receive frequences**

(30) Priority: 24.07.2006 US 492371
(71) Applicant: Provigent Ltd., 46764 Herzlia (IL)
(72) Inventor: Charash, Dan, Herzlia (IL)
(74) Representative: Bredema

(57) **Abstract**

A communication system includes a directional antenna. The system includes a transmitter, which is arranged to transmit first signals in a first frequency band to a remote communication system over a point-to-point communication link via the directional antenna during first time intervals. The system further includes a receiver, which is arranged to receive second signals in a second frequency band, different from the first frequency band, from the remote communication system over the point-to-point communication link via the directional antenna only during second time intervals that do not overlap the first time intervals.

## Description

### FIELD OF THE INVENTION

The present invention relates generally to communication systems, and particularly to methods and systems for multiplexing data in wireless point-to-point communication links.

### BACKGROUND OF THE INVENTION

Wireless Point-to-point (PTP) communication links are used for exchanging data between communication systems in a variety of applications, such as cellular backhaul, fixed wireless network connections, bridging remote data networks, and many others. The vast majority of known bidirectional PTP links continually transmit on two separate frequencies, one frequency for each link direction, thus enabling an efficient usage of the spectrum. For example, Ericsson LM (Stockholm, Sweden) produces a family of microwave PTP links called MINI-LINK. Details regarding these products are available at www.ericsson.com/products/hp/mini_link_pa.shtml

Some newer PTP links use the spectrum efficiently by employing time division duplexing (TDD) schemes, which multiplex bidirectional data over a single radio frequency. For example, Hitachi Kokusai Electric, Inc. (Tokyo, Japan), produce a TDD microwave link called Hitachi Sinelink® 25G. Details regarding this product are available at www.h-kokusai.com/products/wireless/broad band/sinelink25g.html.

### SUMMARY OF THE INVENTION

Embodiments of the present invention provide improved methods and systems for multiplexing data over two directions of a point-to-point (PTP) communication link that connects two communication systems, typically using directional antennas. In principle, the two link directions are multiplexed in time division and transmitted over two different frequencies. In other words, each communication system either transmits or receives at any given time, but does not transmit and receive simultaneously. At each communication system, transmission and reception use different frequencies. As a result, the link is spectrally less efficient, since at least one frequency band is unutilized at any given time. However, since a given communication system does not transmit and receive simultaneously, the system's transmitter and receiver can be connected to the antenna without a need for a diplexer. Eliminating the diplexer reduces the cost, size and complexity of the system, and also offers better operational flexibility.

Since each communication system transmits and receives on different frequencies, the communication link can be operated in licensed frequency bands that are dedicated to FDD systems.

There is therefore provided, in accordance with an embodiment of the present invention, a communication system, including:
a directional antenna;
a transmitter, which is arranged to transmit first signals in a first frequency band to a remote communication system over a point-to-point communication link via the directional antenna during first time intervals; and
a receiver, which is arranged to receive second signals in a second frequency band, different from the first frequency band, from the remote communication system over the point-to-point communication link via the directional antenna only during second time intervals that do not overlap the first time intervals.

In an embodiment, the system includes a switch, which is operative to connect the transmitter to the directional antenna during the first time intervals and to connect the receiver to the directional antenna during the second time intervals.

In some embodiments, the first and second frequency bands include bands that are licensed for use by frequency division duplex (FDD) communication systems by a regulatory authority.

In another embodiment, the first and second time intervals are interleaved with one another to form a repetitive frame sequence.

In yet another embodiment, the first signals are transmitted at a partial duty-cycle, and the transmitter is arranged to increase an instantaneous bit rate of the first signals relative to a bit rate at which the first signals would be transmitted at a full duty-cycle, so as to compensate for transmitting the first signals during only the first time intervals.

In still another embodiment, the transmitter is arranged to accept data for transmission to the remote communication system, and to increase the instantaneous bit rate of the first signals by mapping the data to a sequence of modulated symbols with a number of bits per symbol greater than would be used for transmission of the first signals at a full duty-cycle.

In some embodiments, the transmitter is arranged to encode the data using a forward error correction (FEC) code having a coding gain greater than would be used for encoding the data at a full duty-cycle.

The transmitter is sometimes arranged to vary the instantaneous bit rate of the first signals over time by modifying at least one of a coding rate of the FEC code and a symbol constellation out of which the modulated symbols are selected.

In an embodiment, the transmitter is arranged to reduce a peak-to-average ratio (PAR) of the first signals. Additionally or alternatively, the transmitter may be arranged to predistort the first signals so as to reduce non-linear distortion contributed by the transmitter to the first signals.

In another embodiment, the second signals include data encoded using a forward error correction (FEC) code by the remote communication system, and the receiver is arranged to decode the FEC code so as to reconstruct the data.

In yet another embodiment, the receiver is arranged to lock an adaptive receiver loop at a beginning of each of the second time intervals so as to receive the second signals. In an embodiment, the second signals include pilot signals, and the receiver is arranged to recover a carrier phase of the second signals based on the pilot signals.

There is also provided, in accordance with an embodiment of the present invention, a method for communication, including:
transferring first signals in a first frequency band from a first communication system to a second communication system over a point-to-point communication link during first time intervals; and
transferring second signals in a second frequency band, different from the first frequency band, from the second communication system to the first communication system over the point-to-point communication link only during second time intervals that are selected so as not to overlap any of the first intervals.

There is additionally provided, in accordance with an embodiment of the present invention, a communication link, including:
a first communication system, including:
   a first directional antenna;
   a first transmitter, which is arranged to transmit first signals in a first frequency band via the first directional antenna during first time intervals; and
   a first receiver, which is arranged to receive second signals in a second frequency band, different from the first frequency band, via the first directional antenna only during second time intervals that do not overlap the first time intervals; and
   a second communication system, including:
      a second directional antenna;
      a second transmitter, which is arranged to transmit the second signals to the first communication system in the second frequency band via the second directional antenna during the second time intervals; and
      a second receiver, which is arranged to receive the first signals from the first communication system in the first frequency band, via the second directional antenna during the first time intervals.

In some embodiment, the first signals are modulated using a first modulation scheme, and the second signals are modulated using a second modulation scheme different from the first modulation scheme. Additionally or alternatively, the first signals are encoded using a first forward error correction (FEC) code, and the second signals are modulated using a second FEC code different from the first FEC code. Further additionally or alternatively, the first time intervals have a first duration, and the second time intervals have a second duration different from the first duration. In some embodiments, the first and second transmitters are respectively arranged to vary first and second durations of the first and second time intervals over time.

The present invention will be more fully understood from the following detailed description of the embodiments thereof, taken together with the drawings in which:

### BRIEF DESCRIPTION OF THE DRAWINGS

Fig. 1 is a schematic, pictorial illustration of a point-to-point communication link, in accordance with an embodiment of the present invention;
Fig. 2 is a diagram that schematically illustrates a method for time and frequency domain multiplexing, in accordance with an embodiment of the present invention;
Fig. 3 is a block diagram that schematically illustrates a communication system, in accordance with an embodiment of the present invention; and
Fig. 4 is a flow chart that schematically illustrates a method for multiplexing in a point-to-point communication link, in accordance with an embodiment of the present invention.

### DETAILED DESCRIPTION OF EMBODIMENTS

### OVERVIEW

As noted above, the methods and systems described herein multiplex bidirectional data over a bidirectional PTP communication link such that each communication system either transmits or receives at any particular point in time, but not simultaneously. At each system, transmission and reception use different frequencies. The communication links described hereinbelow are usually deployed in licensed FDD spectrum.

Unlike some known FDD links in which each communication system transmits and receives continually over respective transmit and receive frequencies, the communication systems described herein are constrained to transmit at a partial duty-cycle, alternating between transmission and reception. Since at any given time at least one frequency band is unused, the transmission time available to each link direction is reduced, which may reduce the spectral efficiency and the capacity of the link. On the other hand, the constraint of not allowing simultaneous transmission and reception enables connecting the system's transmitter and receiver to the antenna without a diplexer. Eliminating the diplexer reduces the cost, size and complexity of the system, and also offers better operational flexibility.

The reduced link capacity is re-gained using other means, depending on the specific application. For example, when the links described herein are operated in a licensed FDD band, it may not be possible to increase the symbol rate of the link to compensate for the reduced duty-cycle, because of the constrained bandwidth allocation. Therefore, in some embodiments, the links described below re-gain the capacity by using modulation schemes having higher spectral efficiencies.

However, high spectral efficiency modulation schemes are often characterized by small Euclidean distances, which degrade the error performance and/or the communication range of the link. In order to compensate for this degradation, some embodiments of the present invention use additional measures, such as high-performance forward error correction (FEC), peak-to-average ratio (PAR) reduction and predistortion of the transmitted signal, and/or improved digital carrier recovery.

### SYSTEM DESCRIPTION

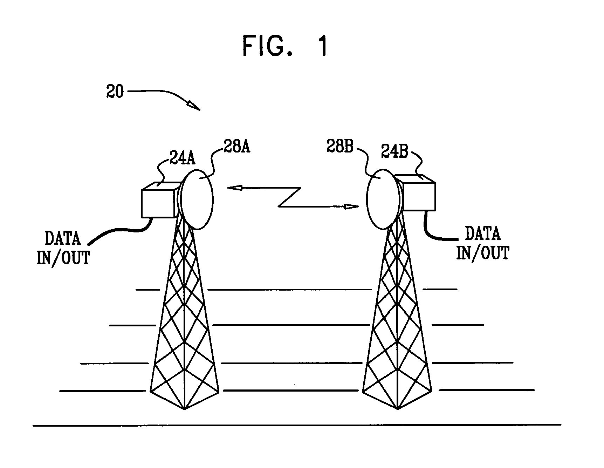

Fig. 1 is a schematic, pictorial illustration of a point-to-point (PTP) communication link 20, in accordance with an embodiment of the present invention. Link 20 comprises two communication systems 24, denoted 24A and 24B, which exchange data with one another over a wireless channel. Systems 24A and 24B respectively comprise directional antennas 28A and 28B, which are directed towards one another. Each antenna may comprise a dish antenna, a horn antenna, a planar array, or any other suitable directional antenna type known in the art.

Link 20 comprises a bidirectional link, in which data is transferred both from system 24A to system 24B and in the opposite direction. The two directions of the link may be symmetrical, i.e., transferring the same data rate, or asymmetrical, i.e., transferring different data rates.

Unlike some known methods and systems that use either TDD or FDD, the two directions of link 20 are multiplexed in time division and transmitted over two different radio frequencies. In other words, each communication system either transmits or receives at any given time, but does not transmit and receive simultaneously. At each communication system, transmission and reception use different frequencies. As a result, the spectral efficiency of the link is reduced. The reduction in spectral efficiency is compensated for using means that are described hereinbelow.

Since a given communication system does not transmit and receive simultaneously, the system does not need to use a diplexer in order to connect the transmitter and receiver to the antenna. Eliminating the diplexer reduces the cost, size and complexity of the system. Additionally, eliminating the diplexer provides better operational flexibility in selecting and changing transmission and reception frequencies. In some cases, eliminating the diplexer reduces the insertion loss of both the transmitted and the received signals.

Since each communication system transmits and receives on different frequencies, link 20 can be operated in licensed frequency bands that are allocated to FDD links. Some of these frequency bands are dedicated to FDD PTP links. For example, FDD PTP spectrum is allocated in the 13, 15, 18, 23, and 38 GHz bands. FDD PTP channels are typically allocated in pairs of transmit and receive frequencies. Links operating in these bands comprise, for example, cellular backhaul links and links for bridging remote data networks.

From a regulatory standpoint, link 20 qualifies both as a TDD and an FDD link. Therefore, the link can be deployed in any suitable licensed frequency band. Alternatively, link 20 may use unlicensed spectrum, as well.

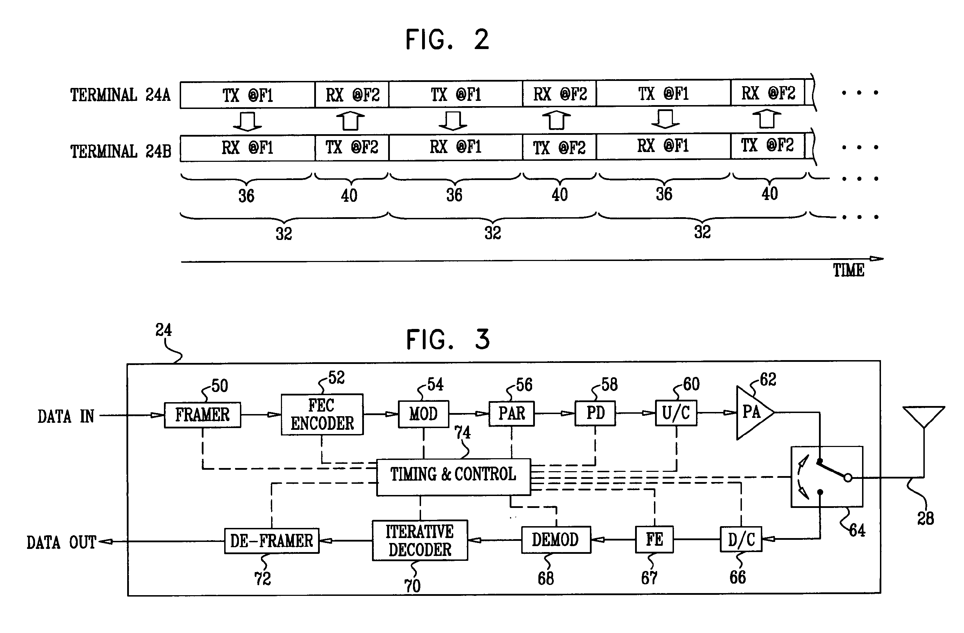

Fig. 2 is a diagram that schematically illustrates a method for time and frequency domain multiplexing used in link 20, in accordance with an embodiment of the present invention. The two directions of link 20 use two frequencies denoted F1 and F2, respectively. Data from system 24A to system 24B is transmitted on frequency F1, and data from system 24B to system 24A is transmitted on frequency F2. The values of F1 and F2 and the separation between them can be set to any suitable values.

Systems 24A and 24B alternate between transmission and reception in accordance with a repetitive frame structure. The time domain is divided into a sequence of frames 32, which are sub-divided into time intervals referred to as slots. Frames 32 are divided into respective first slots 36 and second slots 40. During first time slots 36, system 24A transmits data and system 24B receives the transmitted data over frequency F1. During second time slots 40, system 24B transmits data and system 24A receives the transmitted data over frequency F2. (Usually, frames 32 additionally comprise guard time intervals for accounting for the propagation delay between systems 24A and 24B. The guard time intervals are omitted from the figure for clarity.)

The length of frames 32 is typically in the range of 100 microseconds to 3 milliseconds, although other frame lengths can also be used. The first and second time slots can be of equal lengths or different lengths. The exemplary frame structure of Fig. 2 is shown purely for the sake of conceptual clarity. In alternative embodiments, any other duplexing method in which each system transmits and receives on different frequencies, and does not transmit and receive simultaneously, can be used. For example, the lengths of the first and second time slots may be variable or adaptive, e.g., depending on the amount of data to be transferred over a particular direction of the link.

As demonstrated by Fig. 2, the time resource in link 20 is divided between the two link directions. Each direction of the link is transmitted intermittently, using only part of the frame. For a given channel bandwidth, the partial duty-cycle transmission reduces the number of symbols transferred per frame in each direction. In some embodiments, link 20 increases the instantaneous transmitted bit rate in order to compensate for the partial duty-cycle. For example, link 20 may use modulation schemes having high spectral efficiencies in order to transfer a higher number of bits per frame using the available number of symbols. The use of high spectral efficiency modulation schemes is particularly suitable when link 20 uses licensed FDD channels, since the symbol rate of the link cannot be increased due to the constrained maximum bandwidth of these channels.

However, high spectral efficiency modulation schemes are often characterized by relatively small Euclidean distances, which degrade the noise and distortion immunity of the link. As a result, the achievable error performance and/or the communication range of the link are typically degraded when using such modulation schemes. In some embodiments, systems 24 comprise one or more mechanisms for improving the link performance in order to compensate for the reduced performance of the modulation scheme. Such performance-improving mechanisms may comprise, for example, high performance forward error correction (FEC), reduction of the peak-to-average ratio (PAR) of the transmitted signal, improved digital carrier recovery and pre-distortion of the transmitted signal. These mechanisms are described in greater detail below.

Fig. 3 is a block diagram that schematically illustrates communication system 24, in accordance with an embodiment of the present invention. Data for transmission is accepted by a framer 50, which buffers the input data and formats it in blocks of data suitable in size for transmission over the appropriate time slots (36 or 40). Each block of data is encoded using a FEC code by a FEC encoder 52. In some embodiments, the code used by encoder 52 comprises an iterative code (i.e., a code that may be decoded by an iterative decoding process), such as a low density parity check (LDPC) code or a turbo code. The error rate performance of iterative codes often approaches the channel capacity. Alternatively, the code used by encoder 52 may comprise any suitable forward error correction code known in the art.

The encoded data is modulated by a modulator 54, which produces a sequence of transmitted symbols responsively to bits of data. Modulator 54 maps data bits to symbols selected from a predetermined symbol constellation. As noted above, the modulator uses a high spectral efficiency modulation scheme. The high spectral efficiency is typically achieved by mapping multiple data bits onto each transmitted symbol. For example, modulator 54 may use quaternary phase shift keying (QPSK) modulation (two bits per symbol), 16 symbol quadrature-amplitude modulation (16-QAM, four bits per symbol), 64-QAM (six bits per symbol) or any other suitable modulation scheme. In some embodiments, modulator 54 can use orthogonal frequency division multiplexing (OFDM) or other multi-carrier modulation.

In many practical cases, the sequence of transmitted symbols produced by modulator 54 has an instantaneous power which varies significantly over time. These instantaneous power variations can be expressed in terms of the peak-to-average ratio (PAR), also known as crest factor, which is defined as the ratio between the maximum instantaneous power and the average power of the signal at the modulator output. High PAR values typically degrade the link performance by causing non-linear distortion in various transmitter and/or receiver circuits during periods of large instantaneous signal power. In particular, high PAR values limit the operating point of the transmitter's power amplifier, thus reducing its output power and efficiency.

In some embodiments, system 24 comprises a PAR reduction module 56, which reduces the PAR of the signal produced by modulator 54. Numerous methods and several devices for reducing PAR are known in the art, and any suitable method or device can be used for this purpose.

In some embodiments, system 24 comprises a predistortion (PD) module 58, which predistorts the signal before transmission in order to compensate for non-linear effects of the transmitter, particularly of the transmitter power amplifier. Predistortion may be applied using digital and/or analog circuitry. Predistorting the transmitted signal improves the linearity of the transmitter and enables it to provide a higher output power and better efficiency. Predistortion may be performed either in combination with or separately from PAR reduction.

Various predistortion methods and devices known in the art can be used for implementing PD module 58. For example, Karam and Sari describe three types of predistortion schemes applied to 64-QAM and 256-QAM digital microwave radio systems in "Analysis of predistortion, equalization, and ISI cancellation techniques in digital radio systems with nonlinear transmit amplifiers," IEEE transactions on Communications (37:12), December, 1989, pages 1245-1253, which is incorporated herein by reference. Another paper by Karam and Sari entitled "A data predistortion technique with memory for QAM radio systems," IEEE transactions on Communications (39:2), February, 2001, pages 336-344, which is incorporated herein by reference, describes a predistortion technique with memory for compensating for high power amplifier (HPA) nonlinearities in digital microwave radio systems. Some predistortion methods apply a polynomial function to the transmitted signal. The polynomial coefficients (e.g., the linear, third and fifth orders) determine the predistortion characteristics.

The predistorted signal is converted to an analog signal using a digital-to-analog converter (not shown) and then up-converted to an appropriate transmit frequency by an up-converter 60, and amplified by a power amplifier (PA) 62. The amplified signal is then fed via a Transmit/Receive (T/R) switch 64 to antenna 28 and transmitted over the wireless channel. As noted above, system 24 alternates between transmission and reception. During transmission, T/R switch 64 connects PA 62 to the antenna.

During reception, T/R switch connects antenna 28 to a down-converter 66, which down-converts the received radio signal to a suitable baseband or intermediate frequency (IF). The down-converted signal is processed by a receiver front end (FE) 67. The FE samples the signal using an analog-to-digital converter and performs functions such as synchronization, equalization, carrier recovery, gain control, and matched filtering. FE 67 produces a stream of digitally-represented received symbols. A demodulator 68 demodulates the received symbols to produce a stream of encoded data bits. A FEC decoder 70 decodes the FEC-encoded data.

The elements of system 24 related to signal transmission, in the present example comprising elements 50-62 of Fig. 3, are collectively referred to herein as the transmitter. Similarly, the elements of system 24 related to signal reception, in the present example comprising elements 66-72 of Fig. 3, are collectively referred to herein as the receiver. The principles of the present invention, however, are not limited to these particular types of transmitter and receiver, and may likewise be applied to suitable transmitters and receivers of other types, as are known in the art.

In an alternative embodiment, the transmitter and receiver may be connected to the antenna using a power divider or similar device, without using a T/R switch. The insertion loss of these configurations is typically higher with respect to configurations that use a T/R switch.

It should be noted that since system 24 alternates between transmission and reception, the received signal is received intermittently during discontinuous time slots. Therefore, the receiver, and in particular FE 67, should be capable of receiving such a bursty signal. For example, adaptive receiver loops such as synchronization and carrier recovery loops in FE 67 should either remain locked between successive reception time slots, or be able to resume their lock rapidly at the beginning of a new reception time slot.

In some embodiments, a rapid carrier recovery loop may be implemented using pilot signals. In these embodiments, the transmitter transmits one or more pilot signals or symbols, which are used by the receiver to recover the phase (and hence the frequency) of the transmitter carrier. Carrier recovery loops based on pilot signals are described, for example, in U.S. Patent 6,965,633, whose disclosure is incorporated herein by reference, and in a paper by Gansman et al., entitled "Optimum and suboptimum frame synchronization for pilot-symbol-assisted modulation," IEEE transactions on communication (45:10), October, 1997, pages 1327-1337, which is incorporated herein by reference. Alternatively, any other suitable carrier recovery method can be used.

In some embodiments, for example when the FEC code comprises an LDPC or turbo code, decoder 70 uses an iterative decoding process. Iterative FEC decoding processes are described, for example, by Worthen and Stark in "Unified Design of Iterative Receivers using Factor Graphs," IEEE Transactions on Information Theory, (47:2), February, 2001, pages 843-849, and by Richardson and Urbanke in "An Introduction to the Analysis of Iterative Coding Systems," Proceedings of the 1999 Institute for Mathematics and its Applications (IMA) Summer program: Codes, Systems and Graphical Models, Minneapolis, Minnesota, August 2-6, 1999, which are incorporated herein by reference.

A de-framer 72 converts the blocks of data produced by the iterative decoder to a continuous stream of data and provides the stream as output data. A timing and control module 74 controls the different elements of systems 24. In particular, module 74 provides the timing signals for alternating between transmission and reception. In some embodiments, module 74 may control T/R switch 64, set the transmission and reception frequencies of the system, and/or provide clock, timing, and other signals to up-converter 60 and down-converter 66.

The system configuration of Fig. 3 is an exemplary configuration, chosen purely for the sake of conceptual clarity. Other system configurations will be apparent to those skilled in the art. For example, in Fig. 3, PAR reduction and predistortion are implemented using digital circuitry, before the transmitted signal is converted to analog. Alternatively, PAR reduction and/or predistortion can also be implemented after digital-to-analog conversion using analog circuitry. Additionally or alternatively, system 24 may use separate antennas for transmission and reception, in which case T/R switch 64 is omitted. In some embodiments, system 24 is partitioned into an indoor unit (IDU) and an outdoor unit (ODU) adjacent to antenna 28.

In general, the two directions of a particular link need not necessarily have the same configuration. For example, the two link directions may use different FEC codes, different modulation schemes and/or different data rates. Each direction may or may not use PAR and/or predistortion, independently of the opposite direction. In each direction, the modulation scheme and/or FEC code used may vary over time, for example in order to match the current channel conditions.

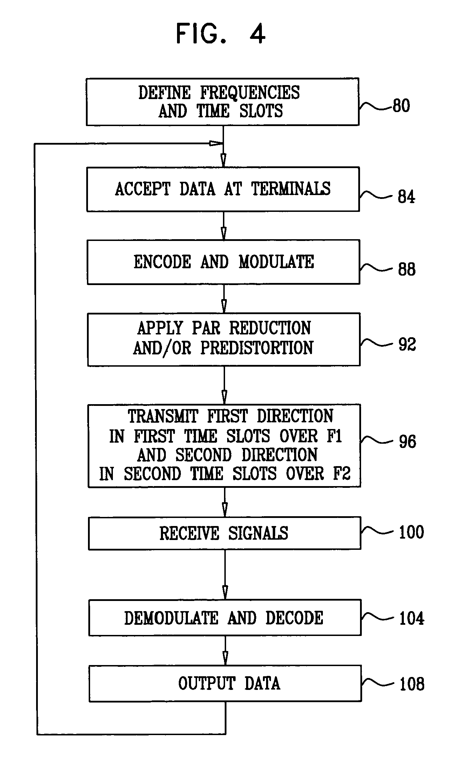

Fig. 4 is a flow chart that schematically illustrates a method for multiplexing in point-to-point communication link 20, in accordance with an embodiment of the present invention. The method begins by defining the frame structure and setting the transmission and reception frequencies of the link (F1 and F2), at a configuration step 80.

Systems 24A and 24B accept data for transmission to one another, at a data input step 84. Each system encodes its data using FEC and modulates the encoded data, at an encoding and modulation step 88. Each system applies PAR reduction and/or predistortion, at a predistortion step 92. Each system performs up-conversion and power amplification, to produce a radio signal.

Systems 24A and 24B transmit their respective radio signals to one another, at a transmission step 96. As described above, system 24A transmits data to system 24B during first time slots 36 over frequency F1, and system 24B transmits data to system 24A during second time slots 40 over frequency F2. Each system alternates between transmission and reception on the appropriate frequencies, in accordance with the frame structure defined at step 80 above.

Systems 24A and 24B receive the respective radio signals, at a reception step 100. The signals are down-converted and sampled. The systems demodulate and decode the received symbols, at a demodulation and decoding step 104. Each system outputs the decoded data, at an output step 108.

It will be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art.

## Claims

1. A communication system, comprising:
a directional antenna;
a transmitter, which is arranged to transmit first signals in a first frequency band to a remote communication system over a point-to-point communication link via the directional antenna during first time intervals; and
a receiver, which is arranged to receive second signals in a second frequency band, different from the first frequency band, from the remote communication system over the point-to-point communication link via the directional antenna only during second time intervals that do not overlap the first time intervals.

2. The system according to claim 1, and comprising a switch, which is operative to connect the transmitter to the directional antenna during the first time intervals and to connect the receiver to the directional antenna during the second time intervals.

3. The system according to claim 1, wherein the first and second frequency bands comprise bands that are licensed for use by frequency division duplex (FDD) communication systems by a regulatory authority.

4. The system according to claim 1, wherein the first and second time intervals are interleaved with one another to form a repetitive frame sequence.

5. The system according to claim 1, wherein the first signals are transmitted at a partial duty-cycle, and wherein the transmitter is arranged to increase an instantaneous bit rate of the first signals relative to a bit rate at which the first signals would be transmitted at a full duty-cycle, so as to compensate for transmitting the first signals during only the first time intervals.

6. The system according to claim 5, wherein the transmitter is arranged to accept data for transmission to the remote communication system, and to increase the instantaneous bit rate of the first signals by mapping the data to a sequence of modulated symbols with a number of bits per symbol greater than would be used for transmission of the first signals at a full duty-cycle.

7. The system according to claim 6, wherein the transmitter is arranged to encode the data using a forward error correction (FEC) code having a coding gain greater than would be used for encoding the data at a full duty-cycle.

8. The system according to claim 7, wherein the transmitter is arranged to vary the instantaneous bit rate of the first signals over time by modifying at least one of a coding rate of the FEC code and a symbol constellation out of which the modulated symbols are selected.

9. The system according to claim 1, wherein the transmitter is arranged to reduce a peak-to-average ratio (PAR) of the first signals.

10. The system according to claim 1, wherein the transmitter is arranged to predistort the first signals so as to reduce non-linear distortion contributed by the transmitter to the first signals.

11. The system according to claim 1, wherein the second signals comprise data encoded using a forward error correction (FEC) code by the remote communication system, and wherein the receiver is arranged to decode the FEC code so as to reconstruct the data.

12. The system according to claim 1, wherein the receiver is arranged to lock an adaptive receiver loop at a beginning of each of the second time intervals so as to receive the second signals.

13. The system according to claim 1, wherein the second signals comprise pilot signals, and wherein the receiver is arranged to recover a carrier phase of the second signals based on the pilot signals.

14. A method for communication, comprising:
transferring first signals in a first frequency band from a first communication system to a second communication system over a point-to-point communication link during first time intervals; and
transferring second signals in a second frequency band, different from the first frequency band, from the second communication system to the first communication system over the point-to-point communication link only during second time intervals that are selected so as not to overlap any of the first intervals.

15. The method according to claim 14, wherein transferring the first and second signals comprises transmitting the signals over the point-to-point communication link via a directional antenna.

16. The method according to claim 14, wherein the first and second frequency bands comprise bands that are licensed for use by frequency division duplex (FDD) communication systems by a regulatory authority.

17. The method according to claim 14, wherein transferring the first and second signals comprises interleaving the first and second time intervals with one another to form a repetitive frame sequence.

18. The method according to claim 14, wherein the first signals are transmitted at a partial duty-cycle, and wherein transferring the first signals comprises increasing an instantaneous bit rate of the first signals relative to a bit rate at which the first signals would be transmitted at a full duty-cycle, so as to compensate for transmitting the first signals during only the first time intervals.

19. The method according to claim 18, wherein increasing the instantaneous bit rate comprises mapping input data to a sequence of modulated symbols with a number of bits per symbol greater than would be used for transmission of the first signals at a full duty-cycle.

20. The method according to claim 19, and comprising encoding the input data using a forward error correction (FEC) code having a coding gain greater than would be used for encoding the data at a full duty-cycle.

21. The method according to claim 20, wherein transferring the first signals comprises varying the instantaneous bit rate of the first signals over time by modifying at least one of a coding rate of the FEC code and a symbol constellation out of which the modulated symbols are selected.

22. The method according to claim 14, wherein transferring the first signals comprises reducing a peak-to-average ratio (PAR) of the first signals.

23. The method according to claim 14, wherein transferring the first signals comprises predistorting the first signals so as to reduce non-linear distortion contributed by a transmitter of the first communication system to the first signals.

24. The method according to claim 14, wherein transferring the first signals comprises locking an adaptive receiver loop in the second communication system at a beginning of each of the first time intervals so as to receive the first signals.

25. The method according to claim 24, wherein the first signals comprise pilot signals, and wherein locking the adaptive receiver loop comprises recovering a carrier phase of the first signals based on the pilot signals.

26. A communication link, comprising:
a first communication system, comprising:
a first directional antenna;
a first transmitter, which is arranged to transmit first signals in a first frequency band via the first directional antenna during first time intervals; and
a first receiver, which is arranged to receive second signals in a second frequency band, different from the first frequency band, via the first directional antenna only during second time intervals that do not overlap the first time intervals; and
a second communication system, comprising:
a second directional antenna;
a second transmitter, which is arranged to transmit the second signals to the first communication system in the second frequency band via the second directional antenna during the second time intervals; and
a second receiver, which is arranged to receive the first signals from the first communication system in the first frequency band, via the second directional antenna during the first time intervals.

27. The link according to claim 26, wherein the first signals are modulated using a first modulation scheme, and wherein the second signals are modulated using a second modulation scheme different from the first modulation scheme.

28. The link according to claim 26, wherein the first signals are encoded using a first forward error correction (FEC) code, and wherein the second signals are modulated using a second FEC code different from the first FEC code.

29. The link according to claim 26, wherein the first time intervals have a first duration, and wherein the second time intervals have a second duration different from the first duration.

30. The link according to claim 26, wherein the first and second transmitters are respectively arranged to vary first and second durations of the first and second time intervals over time.
